# EUROPEAN PATENT APPLICATION

(11) **EP 4 715 443 A1**
(43) Date of publication of application: **25.03.2026**
(21) Application number: 23937829.2
(22) Date of filing: 19.05.2023
(51) Int. Cl.: G02B 26/08, G03B 9/06

(54) **APERTURE MECHANISM**

(71) Applicant: Beijing Xiaomi Mobile Software Co., Ltd., Beijing 100085 (CN)
(72) Inventor: UNO, Masaru, Tokyo 141--0031 (JP)
(74) Representative: dompatent
(86) International application number: PCT/CN2023/095307
(87) International publication number: WO 2024/239150

(57) **Abstract**

The subject matter of the present disclosure is to provide an iris mechanism capable of being miniaturized. An iris mechanism A, including: a frame portion (1) formed around an optical axis; an iris blade (2) capable of moving relative to the frame portion (1) in a direction intersecting the optical axis and capable of changing an opening area of an opening in a direction of the optical axis along with a movement; and a drive portion 3 configured to drive the iris blade (2) to move. The drive portion (3) includes an SIDM (31) as a drive source configured to extend and retract in a linear direction according to energization to generate a drive force in the linear direction; a conversion portion (32) configured to convert the drive force in the linear direction of the SIDM (31) into a rotational drive force; and a rotational transfer portion (33) continuous with the conversion portion (32) and connected to the iris blade (2) for rotational movement based on a rotation center.

## Description

### FIELD

The present disclosure relates to an iris mechanism that may be applied to a camera built into, for example, an information device such as a smart phone or a tablet computer.

### BACKGROUND

In the related art, an iris mechanism is described, for example, in Japanese patent publication No. 2011-90028. In the related art, a galvanometer is used as a drive source configured to move an iris blade. Since the galvanometer is a structure composed of a coil, a permanent magnet, a spring, and the like, it is difficult to miniaturize the iris mechanism, and there is room for improvement when applying it to a camera built into an information device.

### SUMMARY

### Problem to be solved by the present disclosure

In view of this, the subject matter of the present disclosure is to provide an iris mechanism capable of being miniaturized.

### Solution for solving the problem

A first aspect of the present disclosure provides an iris mechanism configured to increase or decrease a passing area of light in a direction of an optical axis, including: a frame portion formed around the optical axis; an iris blade capable of moving relative to the frame portion in a direction intersecting the optical axis and capable of changing an opening area of an opening in the direction of the optical axis along with a movement; and a drive portion configured to drive the iris blade to move, in which the drive portion includes: a smooth impact drive mechanism (SIDM) as a drive source configured to extend and retract in a linear direction according to energization to generate a drive force in the linear direction; a conversion portion configured to convert the drive force in the linear direction of the smooth impact drive mechanism into a rotational drive force; and a rotational transfer portion continuous with the conversion portion and connected to the iris blade for rotational movement based on a rotation center.

Additionally, two combined pairs of the iris blade and the drive portion are provided, and sandwich the optical axis in the direction intersecting the optical axis.

It can also be configured that the smooth impact drive mechanism has an output shaft extending in the linear direction, the conversion portion has a pair of clamping portions in an opposing relationship in the direction of the optical axis, the output shaft is clamped by the pair of clamping portions in a sliding permittable manner, and in the conversion portion, the drive force in the linear direction of the output shaft is converted into the rotational drive force through contact between an outer circumferential face of the output shaft and the pair of clamping portions, to enable the rotational transfer portion to perform the rotational movement.

It can also be configured that each of opposing faces of the pair of clamping portions is a flat face.

It can also be that in the pair of clamping portions, a spacing holding portion configured to hold a spacing of the pair of clamping portions is provided at a radially symmetrical position of the conversion portion based on the rotation center relative to a position in contact with the outer circumferential face of the output shaft.

The spacing holding portion is clamped between the pair of clamping portions, and may be constructed as a rotating body capable of rotating relative to the pair of clamping portions.

The rotating body may also be constructed as a ball.

At least one of the pair of clamping portions may also have a recess for a part of the ball to be embedded.

The recess may also be constructed as a through hole extending through at least one of the pair of clamping portions.

It can also be configured that the conversion portion has a force application portion, and the force application portion applies a force against the pair of clamping portions in an opposing direction of the pair of clamping portions to hold the spacing fixed.

The rotational transfer portion has a permanent magnet curved along a circumferential direction based on the rotation center; and the frame portion has a magnetic detection element at a position opposing the permanent magnet in the direction of the optical axis.

The iris blade is supported by an end portion on a side away from the rotation center.

The iris blade has an elongated hole extending a direction orthogonal to a movement direction relative to the frame portion and the direction of the optical axis, and
the end portion of the rotational transfer portion may also be connected to the elongated hole.

### BRIEF DESCRIPTION OF THE DRAWINGS

FIG. 1 is a perspective view illustrating a combined state of an iris mechanism, a shooting element, a lens assembly, and a prism according to an embodiment of the present disclosure.
FIG. 2 is a front view of an iris mechanism.
FIG. 3 is a sectional view observed in a direction of III-III arrow in FIG. 2.
FIG. 4 is a sectional view observed in a direction of IV-IV arrow in FIG. 2.
FIG. 5 is an exploded perspective view illustrating an iris mechanism.
FIG. 6 is an exploded perspective view illustrating a drive portion in an iris mechanism.
FIG. 7 is a diagram illustrating a relationship between movement of a drive portion and an iris blade in the iris mechanism.

### DETAILED DESCRIPTION

An iris mechanism A according to an embodiment of the present disclosure is described with reference to the accompanying drawings. It should be noted that the "optical axis" described below is the optical axis that passes through a center of each lens in the lens assembly B in which a plurality of lenses are combined.

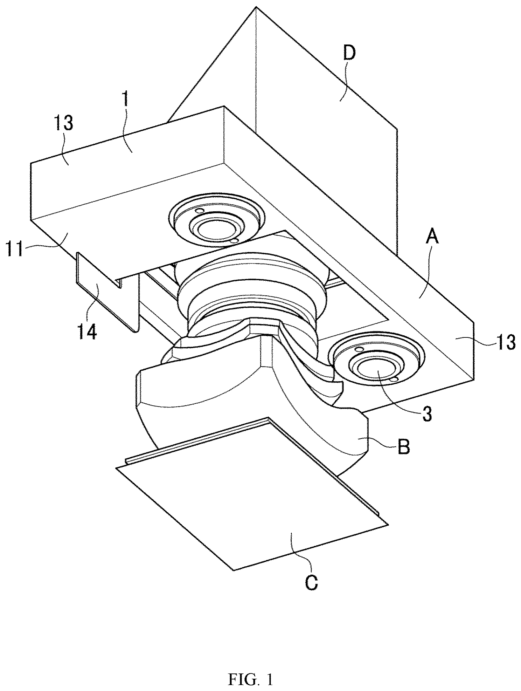

The iris mechanism A of the present embodiment is suitable for use in, for example, a camera built into an information device (a smart phone, etc.) not illustrated, and is configured to allow an appropriate amount of light to reach the shooting element C by increasing or decreasing a passing area of light in a direction of the optical axis. FIG. 1 illustrates a structural example of an iris mechanism A and its associated mechanism. An up-and-down direction in FIG. 1 corresponds to the direction of the optical axis (the direction of the optical axis in the iris mechanism A, the lens assembly B, and the shooting element C). The direction of the optical axis is along a surface (in most cases a side with a screen) and a back of the information device, either along a long side or a short side. In FIG. 1, a prism D, an iris mechanism A, a lens assembly B, and a shooting element C are combined in order from an incident side of shooting light. It should be noted that a part of the lens assembly B is overlappingly configured inside the iris mechanism A. The prism D refracts the shooting light entering from the outside through an opening in the back, for example, of the information device, and directs it to the iris mechanism A. The shooting light passing through the iris mechanism A reaches the shooting element C through the lens assembly B. In addition, although not illustrated in the drawings, an autofocus mechanism for imaging on the shooting element C is provided.

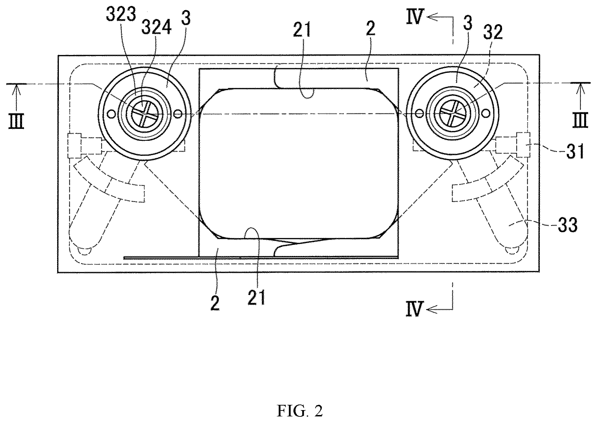

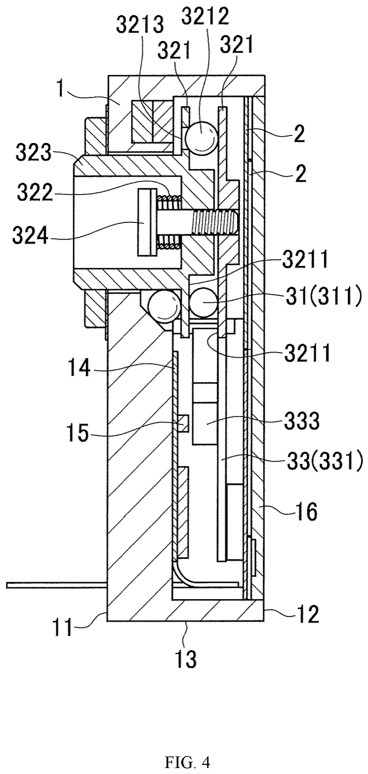

The iris mechanism A mainly has a frame portion 1, an iris blade 2, and a drive portion 3. The shapes and positional relationships of the portions are illustrated in FIGS. 2 to 5. The frame portion 1 is a portion formed around the optical axis. The frame portion 1 of the present embodiment is rectangular when viewed from a direction of the optical axis, and is a flat box-like body (specifically a rectangular body) in the direction of the optical axis. A bottom 11 of the frame portion 1 (a portion near the lens assembly B) is open in a region around the optical axis and a portion supporting a conversion portion 32, and the remaining region is closed. A drive substrate 14 is provided on the closed region of the bottom 11, electrically connected to a main body side of the information device, to control energization of the drive portion 3, or to receive a detection signal related to an action of the drive portion 3. The drive substrate 14 employs a flexible substrate. On the other hand, an entire face of the top 12 (the portion close to a side of the prism D) is open, and a cover plate 16 having a substantially rectangular opening in a center is mounted closer to an outside of the frame portion 1 than the iris blade 2. By means of the cover plate 16, the shooting light is prevented from passing through the frame portion 1 other than the portion corresponding to an opening of the light transmission portion 21 (described below) possessed by the iris blade 2. In addition, the sides 13 are closed on all four sides. In addition, the frame portion 1 is configured to at least support the iris blade 2 and the drive portion 3, and various changes in form may be made according to a shape of an object (information device, etc.) to which the iris mechanism A is provided. Therefore, it is not necessary to be a box form either.

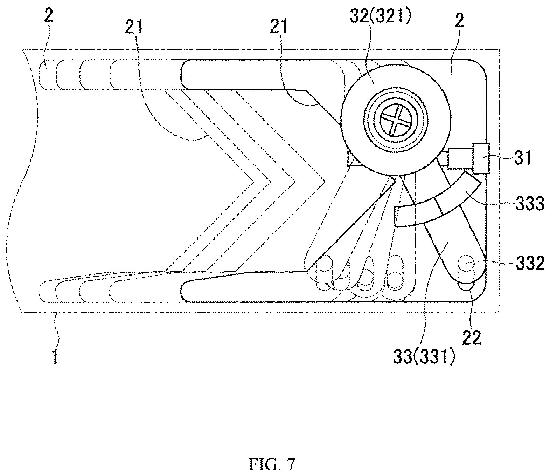

The iris blade 2 is provided to be capable of moving relative to the frame portion 1 in a direction intersecting the optical axis. The iris blade 2 of the present embodiment is capable of reciprocating in a direction orthogonal to the optical axis, i.e., in a linear direction along a long side of the frame portion 1. The iris blade 2 is, for example, guided to move to an inner surface of the side 13 of the frame portion 1. In the iris mechanism A, a pair of (2) iris blades 2, 2 is configured on the frame portion 1 in a partially overlapping manner in the direction of the optical axis. The pair of iris blades 2, 2 is configured to be symmetrical based on a straight line parallel to a short side of the frame portion 1 and in line with the optical axis when viewed from the direction of the optical axis. The pair of iris blades 2, 2 is then controlled to move synchronously. That is, one and the other of the pair of iris blades 2, 2 move a same distance in a linear direction per unit of time as they reciprocate. Each iris blade 2 is in a shape of a rectangular flat plate having a cutout formed from a short side toward an interior, and the portion is the light transmission portion 21 through which the shooting light passes in the direction of the optical axis. The cutout possessed by the light transmission portion 21 has a straight part along the long side of the rectangle, and a slanted part, the slanted part is continuous with respect to the straight part in an interior direction of the rectangle and has a slanted straight line with respect to the long side and the short side. Thus, the light transmission portion 21 has a laterally longer hexagonal shape (when the opening is wide) or a diamond shape (when the opening is narrow) by the combination of the pair of iris blades 2, 2 corresponding to the movement of the iris blades 2. In FIG. 7, for one of the pair of iris blades 2, 2, a plurality of examples of movement states (opening degrees) are indicated by solid lines and dash-dot-dotted lines. The iris blade 2 may be moved both steplessly and in stages to achieve an opening degree corresponding to an iris value (e.g., each opening degree shown in FIG. 7).

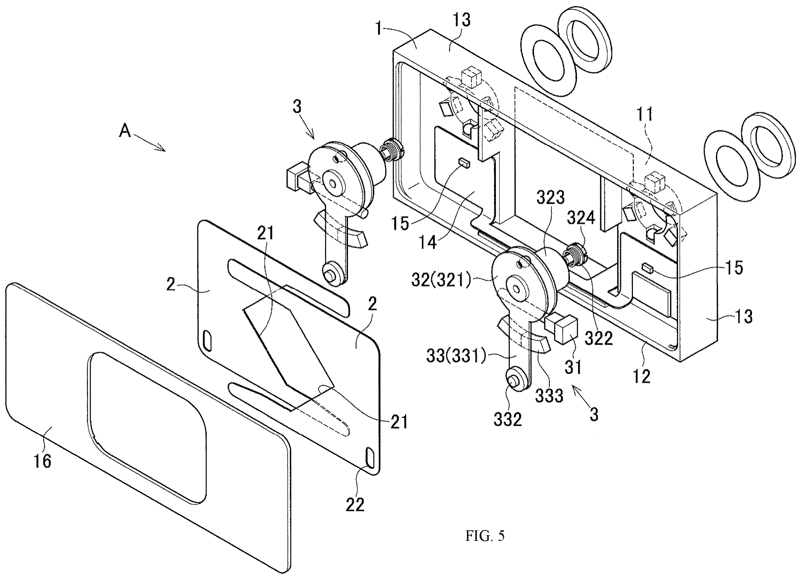

The iris blade 2 is supported by an end portion (rectangular corner/lower corner in FIG. 5) of the drive portion 3 on a side away from the rotation center of the rotational transfer portion 33 (described later). By setting the rotational transfer portion 33 in such a positional relationship, it is possible to configure the rotational transfer portion 33 in such a way that it overlaps the iris blade 2 when viewed from the direction of the optical axis, and no useless space is created inside the frame portion 1, so that it is possible to compactly constitute the iris mechanism A. The iris blade 2 has an elongate hole 22 which extends in a direction orthogonal to a movement direction relative to the frame portion 1 and the direction of the optical axis. The end portion of the rotational transfer portion 33 is connected to the elongated hole 22 in a manner capable of transmitting power from the rotational transfer portion 33 to the iris blade 2 by bringing the connection protrusion 332 into the elongated hole 22, in which the connection protrusion 332 protrudes in the end portion parallel to a rotation axis of the rotational transfer portion 33. In the present embodiment, as illustrated in FIG. 5, the elongated hole 22 is formed along the short side in a lower end side corner of the iris blade 2. The connection protrusion 332 is formed in the form of a cylinder whose cross-section is a perfect circle. Since the connection protrusion 332 is able to move inside the elongated hole 22, it is possible to absorb a positional offset between the rotatably moving rotational transfer portion 33 and the linearly moving iris blade 2 through the elongated hole 22. Thus, it is possible to smoothly convert the rotational movement of the rotational transfer portion 33 into a linear movement of the iris blade 2. The iris blade 2 configured as above changes the opening area of the opening in the direction of the optical axis as it moves relative to the frame portion 1 by means of the light transmission portion 21 in the combination of the pair of iris blades 2, 2. In the present embodiment, since the configuration is such that the pair of iris blades 2 moves sandwiching the optical axis, it is possible to rapidly change the opening area of an axial opening.

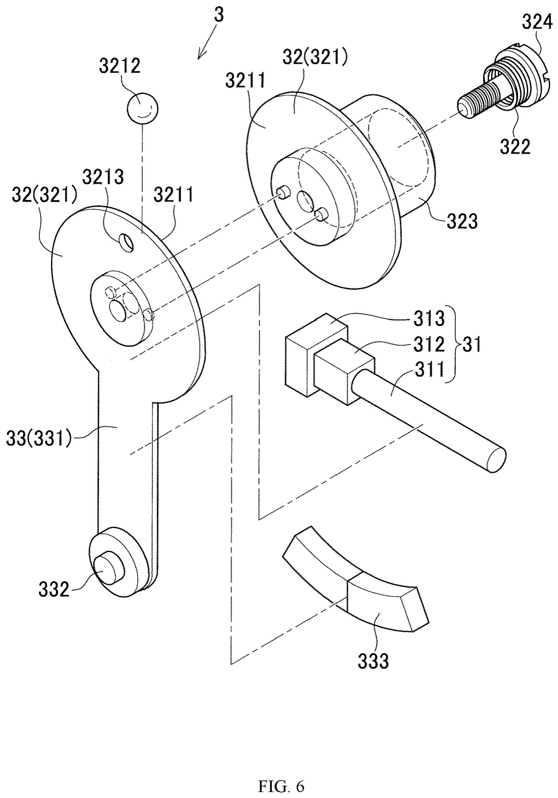

The drive portion 3 is a portion configured to drive the iris blade 2 to move. As illustrated in FIG. 5, two combined pairs of the iris blade 2 and the drive portion 3 are provided and sandwich the optical axis in a direction intersecting with the optical axis (specifically, an orthogonal direction). As illustrated in FIG. 6, the drive portion 3 has a smooth impact drive mechanism (SIDM) 31 as a drive source, a conversion portion 32, and a rotational transfer portion 33.

The SIDM 31 generates a drive force in a linear direction by extending and retracting in the linear direction according to energization. Since the SIDM itself is a publicly known device, only a brief description will be given. The SIDM 31 has an output shaft 311 extending in a direction of the drive force, i.e., in the linear direction. The output shaft 311 is a straight rod, which may be, for example, a straight rod made of carbon fiber reinforced plastics (CFRP). A piezoelectric element 312 and a counterweight 313 integral with the output shaft 311 are provided on an axial end (an end close to an end portion of the frame portion 1) of the output shaft 311. As illustrated in FIG. 2, the counterweight 313 of the SIDM 31 is fixed to an inner surface of the frame portion 1 by bonding or the like. Power is supplied to the piezoelectric element 312 from the drive substrate 14. The piezoelectric element 312 extends and retracts in the axial direction as a result of energization. That is, a mode of the piezoelectric element 312 is a d33 mode. By adjusting an energization state, the piezoelectric element 312 is sharply retracted relative to the slow extension, or, slowly retracted relative to the sharp extension, i.e., with respect to the object to which the drive force is transmitted (the conversion portion 32 in the present embodiment), it is possible to transmit the drive force in one direction in the linear direction by setting a difference between the extension and retraction by means of friction on an outer circumferential portion of the output shaft 311. By changing the manner in which the piezoelectric element 312 is extended and retracted, a direction in which the driving force is transmitted may be determined. It should be noted that the energization of the SIDM 31 is not continuous, but is performed intermittently when extension and retraction. Thus, power consumption for driving may be suppressed. Additionally, it is possible to energize either during extension or during retraction, or only during rapid deformation.

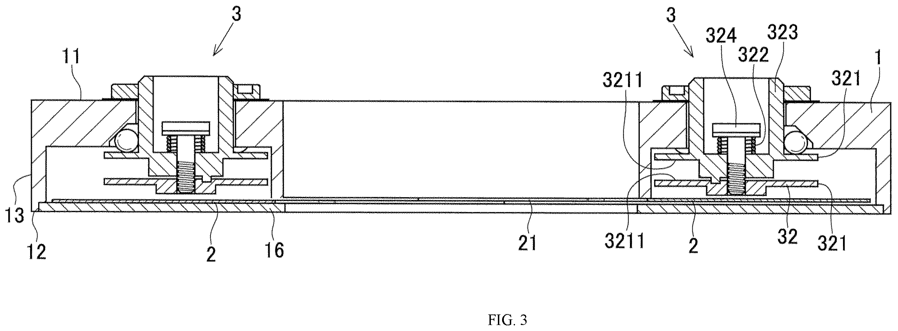

The conversion portion 32 is a portion that converts the drive force in the linear direction generated from the SIDM 31 into a rotational drive force. In the conversion portion 32, the cylindrical support portion 323 is rotatably supported on the bottom 11 of the frame portion 1. It is configured that a ball is provided in the frame portion 1 at a portion that provides support to the support portion 323 for smooth rotation of the conversion portion 32. The conversion portion 32 has a pair of clamping portions 321, 321 in an opposing relationship in the direction of the optical axis. The pair of clamping portions 321, 321 e.g., as illustrated in FIG. 3 or FIG. 6 is integrated by recess-protrusion embedding, and thus is capable of being rotated integrally. The clamping portion 321 is in the form of a circular plate. Thus, each of the opposing faces 3211 of the pair of clamping portions 321, 321 is a flat face. The output shaft 311 of the SIDM 31 contacts the pair of clamping portions 321, 321 (respectively facing inwardly opposing faces 3211) in a friction-generating manner and is clamped in a sliding permittable manner. Friction acts on the axial direction of the output shaft 311. The sliding is generated in a circumferential direction of the clamping portion 321. The configuration of the SIDM 31 relative to the conversion portion 32 is a configuration that the circumferential direction (or tangential direction) of the clamping portion 321 is in axial relationship along the output shaft 311. Accordingly, the drive force in the linear direction of the SIDM 31 is transmitted to the clamping portion 321 as a force toward the circumferential direction through friction acting between the output shaft 311 and the clamping portion 321. The transmitted force is the rotational drive force, so an orientation of the force between the output shaft 311 of the SIDM 31 and the clamping portion 321 of the conversion portion 32 is converted from the linear direction to the rotational direction. In the present embodiment, since the clamping portion 321 contacts the output shaft 311 in a flat face, a contact area between the output shaft 311 and the pair of clamping portions 321, 321 may be kept fixed disregarding an angle of rotation of the conversion portion 32, and thus the conversion of the drive force may be carried out stably. As described above, in the conversion portion 32, the drive force in the linear direction of the output shaft 311 is converted into a rotational drive force by the contact between the outer circumferential face of the output shaft 311 and the pair of clamping portions 321, 321, to enable the rotational transfer portion 33 to perform the rotational movement. By such a structure, it has the advantage of being able to simplify the structure for converting the drive force in the linear direction generated by the SIDM 31 into a rotational drive force. Additionally, when the conversion portion 32 is stopped, position holding is realized by friction between the output shaft 311 of the SIDM 31 and the clamping portion 321, and thus no power for position holding is required.

In the pair of clamping portions 321, 321, a spacing holding portion 3212 configured to hold a spacing of the pair of clamping portions 321, 321 is provided at a radially symmetrical position (at a position 180 degrees apart along the circumferential direction) of the conversion portion 32 based on the rotation center relative to a position in contact with the outer circumferential face of the output shaft 311 of the SIDM 31. By means of the spacing holding portion 3212 combined with the output shaft 311, a distance in the opposing direction of the pair of clamping portions 321, 321 is kept fixed, so that the drive force of the output shaft 311 may be stably transmitted to the conversion portion 32. The spacing holding portion 3212 is a rotating body clamped between the pair of clamping portions 321, 321 and is capable of rotating relative to the pair of clamping portions 321, 321. Since the spacing holding portion 3212 is a rotating body, the spacing holding portion 3212 will not be affected even if the pair of clamping portions 321, 321 undergoes a positional offset in the rotational direction. Specifically, the spacing holding portion 3212 is a ball having a perfect circular shape in cross-section, for example, a metal ball or a ceramic ball may be used. By setting it into a ball, it is possible to easily form the rotatable rotating body, and use a general-purpose article. The spacing holding portion 3212 may be rotated in all directions. Corresponding to the spacing holding portion 3212, at least one of the pair of clamping portions 321, 321 has a recess 3213 for a part of the ball to be embedded. By means of the recess 3213, it is possible to hold the spacing holding portion 3212, which is a ball, in a fixed position of the clamping portion 321. In the present embodiment, the recess 3213 is a through hole extending through the clamping portion 321 in a thickness direction, into which the spacing holding portion 3212, which is a ball, is embedded in a rotatable state. By providing the through hole, the recess 3213 may be formed more easily than if it is provided with a bottom. By combination with the recess 3213, the spacing holding portion 3212 is rotatably supported in a fixed position of the clamping portion 321. In this way, in the pair of clamping portions 321, 321, the contact location of the output shaft 311 of the SIDM 31 and the spacing holding portion 3212 are provided at radially symmetrical positions. Thus, the distance in the opposing direction of the pair of clamping portions 321, 321 is kept fixed. Thus, the friction force associated with the contact may be kept fixed between the output shaft 311 of the SIDM 31 and the clamping portion 321, and the drive force of the output shaft 311 may be stably transmitted to the conversion portion 32.

The conversion portion 32 has a force application portion 322. The force application portion 322 applies a force against the pair of clamping portions 321, 321 in an opposing direction of the pair of clamping portions 321, 321 to hold a fixed spacing. By the force application portion 322, it is possible to keep a constant degree of contact between the output shaft 311 of the SIDM 31 and the pair of clamping portions 321, 321, while also preventing the spacing holding portion 3212, which is a ball, from being dislodged from the recess 3213. The present embodiment uses a coil spring as a compression spring to act as the force application portion 322. The force application portion 322 is wound on a shaft portion of the connection component 324 as a screw. The connection component 324 is threadedly fixed relative to the clamping portion 321 on the side opposite to the force application portion 322 while being able to move axially relative to the clamping portion 321 on the side in contact with the force application portion 322. Relative to the clamping portion 321 on the side in contact with the force application portion 322 (coil spring); a force is applied in a manner that attracts the clamping portion 321 on the opposite side (opposing side) by a counterforce of the spring force. By the applied force, the spacing of the pair of clamping portions 321, 321 is kept narrow.

The rotational transfer portion 33 is continuous with the conversion portion 32 and connected to the iris blade 2 for rotational movement based on the rotation center. Furthermore, the rotation center is not located in the rotational transfer portion 33 itself, but in the clamping portion 321 of the conversion portion 32. An extension direction of the rotation center is parallel to the direction of the optical axis. In the present embodiment, an arm-like part 331 extends radially from the circular plate-like clamping portion 321 of the pair of conversion portions 32 located on a side of the top 12 of the frame portion 1. The arm-like part 331 is integrally provided with the clamping portion 321 to form a flat plate. The rotational transfer portion 33 has a connection protrusion 332 connected to the iris blade 2. In the rotational transfer portion 33 having an arm-like part 331, it is possible to adjust a movement distance of the connection protrusion 332 in a drive force output of the rotational transfer portion 33 in response to a drive force input from the SIDM 31 according to: a ratio between a radial distance from the rotation center of the conversion portion 32 to the contact position of the output shaft 311 of the SIDM 31 and a distance from the rotation center to the connection protrusion 332. Thus, adjustment of the movement distance of the iris blade 2 of the frame portion 1 may be performed, and the desired output (i.e., movement distance) may be set.

The rotational transfer portion 33 has a permanent magnet 333 curved in a circumferential direction based on the rotation center of the conversion portion 32. The permanent magnet 333 is configured such that one pole (e.g., N-pole) is located on a side of the circumferential direction of the rotational transfer portion 33 and the other pole (e.g., S-pole) is located on the other side. Correspondingly, the frame portion 1 has a magnetic detection element 15 in a position opposing the permanent magnet 333 in the direction of the optical axis. The magnetic detection element 15 may for example employ a Hall element or an MR element. A detection signal of the magnetic detection element 15 is sent to the drive substrate 14. A detection result of the magnetic detection element 15 is utilized in a control portion (not illustrated) provided on the application object (information device) of the iris mechanism A. According to the detection result, the control portion controls the drive portion 3 (specifically, the energization of the SIDM 31). By such a combination of the permanent magnet 333 and the magnetic detection element 15, it is possible to grasp the rotational state of the rotational transfer portion 33.

As illustrated above, the present embodiment is an iris mechanism A configured to increase or decrease a passing area of light in the direction of an optical axis, including: a frame portion 1 formed around the optical axis; an iris blade 2 capable of moving relative to the frame portion 1 in a direction intersecting with the optical axis and capable of changing an opening area of an opening in the direction of the optical axis along with a movement; and a drive portion 3 configured to drive the iris blade 2 to move. The drive portion 3 includes an SIDM 31 as a drive source configured to extend and retract in a linear direction according to an energization to generate a drive force in the linear direction; a conversion portion 32 configured to convert a drive force in the linear direction of the SIDM 31 into a rotational drive force; and a rotational transfer portion 33 continuous with the rotational transfer portion and connected to the conversion portion 32 for a rotational movement based on a rotation center. According to the structure, the SIDM 31 is used and configured to move the iris blade 2 by the conversion portion 32 and the rotational transfer portion 33, thereby realizing a compact iris mechanism A.

Additionally, two combined pairs of the iris blade 2 and the drive portion 3 are provided and sandwich the optical axis in a direction intersecting the optical axis. According to the structure, the opening area of the axial opening may be rapidly changed because each iris blade 2 configured to belong to the two pairs moves sandwiching the optical axis.

Additionally, the SIDM 31 has an output shaft 311 extending in the linear direction, the conversion portion 32 has a pair of clamping portions 321, 321 in an opposing relationship in the direction of the optical axis, the output shaft 311 is clamped by the pair of clamping portions 321, 321 in a sliding permittable manner, and in the conversion portion 32, it can also be configured to convert the drive force in the linear direction into the rotational drive force through contact between an outer circumferential face of the output shaft 311 and the pair of clamping portions 321, 321, to enable the rotational transfer portion 33 to perform the rotational movement. According to the structure, it is possible to simplify the structure for converting the drive force in the linear direction generated from the SIDM 31 into a rotational drive force.

Additionally, each of opposing faces 3211 of the pair of clamping portions 321, 321 is a flat face. According to the structure, by contacting in a flat face, the contact area between the output shaft 311 of the SIDM 31 and the pair of clamping portions 321, 321 may be kept fixed by disregarding the rotation angle of the conversion portion 32, and thus the conversion of the driving force may be carried out in a stable manner. A contact area between the output shaft 311 and the pair of clamping portions 321, 321 may be kept fixed disregarding an angle of rotation of the conversion portion 32, and thus the conversion of the drive force may be carried out stably.

Additionally, in the pair of clamping portions 321, 321, a spacing holding portion 3212 configured to hold a spacing of the pair of clamping portions 321, 321 may be provided at a radially symmetrical position of the conversion portion 32 based on the rotation center relative to a position in contact with the outer circumferential face of the output shaft 311. According to the structure, it is possible to stably transmit the drive force of the output shaft 311 to the conversion portion 32 because the distance in the opposing direction of the pair of clamping portions 321, 321 is kept fixed by means of the spacing holding portion 3212.

Additionally, the spacing holding portion 3212 is clamped between the pair of clamping portions 321, 321, and may also be constructed as a rotating body rotatable relative to the pair of clamping portions 321, 321. According to the structure, since the spacing holding portion 3212 is a rotating body, the spacing holding portion 3212 will not be affected even if the pair of clamping portions 321, 321 undergoes a positional offset in the rotational direction.

Additionally, the rotating body may also be constructed as a ball. According to the structure, a rotatable rotating body may be easily formed.

Additionally, at least one of the pair of clamping portions 321, 321 may also have a recess 3213 for a part of the ball to be embedded. According to the structure, the spacing holding portion 3212, which is a ball, may be kept in a fixed position of the clamping portion 321 by the recess 3213.

Additionally, the recess 3213 may also be constructed as a through hole extending through at least one of the pair of clamping portions 321, 321. According to the structure, the recess 3213 may be easily formed.

Additionally, the conversion portion 32 has a force application portion 322; the force application portion 322 may be configured to hold a fixed spacing relative to the pair of clamping portions 321, 321, to apply a force in the opposing direction of the pair of clamping portions 321, 321. According to the structure, the degree of contact between the output shaft 311 of the SIDM 31 and the pair of clamping portions 321, 321 may be kept constant, and the spacing holding portion 3212, which is a ball, can also be prevented from being dislodged from the recess 3213.

Additionally, the rotational transfer portion 33 has a permanent magnet 333 curved in the circumferential direction based on the rotation center, and the frame portion 1 may also have a magnetic detection element 15 at a position opposite the permanent magnet 333 in the direction of the optical axis. According to the structure, the rotational state of the rotational transfer portion 33 may be grasped by the combination of the permanent magnet 333 and the magnetic detection element 15.

Additionally, the iris blade 2 may be supported by an end portion on a side away from the rotation center. According to the structure, it is possible to configure the rotational transfer portion 33 in such a way that it overlaps with the iris blade 2 when viewed in the direction of the optical axis, and thus it is possible to compactly constitute the iris mechanism A.

Additionally, the iris blade 2 has an elongated hole 22 extending in a direction orthogonal to a movement direction relative to the frame portion 1 and the direction of the optical axis, and the end portion of the rotational transfer portion 33 may also be connected to the elongated hole 22. According to the structure, since the positional offset between the rotational transfer portion 33 and the iris blade 2 may be absorbed through the elongated hole 22, it is possible to smoothly convert the rotational movement of the rotational transfer portion 33 into the linear movement of the iris blade 2.

The iris mechanism A according to the present embodiment realizes a compact structure by being configured to use the SIDM 31 to move the iris blade 2 using the conversion portion 32 and the rotational transfer portion 33. Thus, it is possible to miniaturize the iris mechanism A. As a result of miniaturization, existing smart phones may be made thinner and are also able to be applied in a built-in camera of folding smart phones.

Although the present embodiments are described as above, the present disclosure is not limited to the manner described above, and appropriate design variations may be made within the intended scope of the present disclosure. Additionally, the effects of the present disclosure are not limited to those described in the embodiments. That is, all aspects of embodiments of the present disclosure are merely illustrative and do not limit the present disclosure. The scope of the present disclosure is limited by the scope of the claims and not by the above description. Additionally, the scope of the present disclosure is intended to include all variations within the same meaning and scope, as the claims.

For example, although it has been illustrated that the iris mechanism A of the present embodiment may be applied to a camera built into an information device (smart phone, etc.), it is not limited to this. It can also be applied to a single function camera or assembled for use in other devices (in-vehicle devices such as navigation devices, home appliances such as air conditioners, interphones, etc.). Further, the iris mechanism A may also be assembled for use in an optical device other than a camera.

Additionally, with respect to the iris blade 2, in the described embodiment is constituted by 2 pieces as a pair, sometimes by 1 piece, or by more than 3 pieces. Additionally, even in the case of being constituted by 2 pieces, a structure in which 1 piece of iris blades 2 is immovably fixed to the frame portion 1 may be adopted.

Additionally, with respect to the drive portion 3, it can also be configured that only one set of drive portions 3 (among which are, in particular, the SIDM 31 and the conversion portion 32) is constituted, the drive force is separated by the rotational transfer portion 33, and a pair of (2-piece) iris blades 2, 2 is moved by the separated drive force.

Additionally, with respect to the conversion portion 32, the clamping portion 321 in the present embodiment is in the shape of a circular plate, but is not limited to this, and may, for example, also be fan-shaped corresponding to a range of rotational movement. Additionally, the contact that accompanies the friction between the output shaft 311 of the SIDM 31 and the clamping portion 321 may be direct, or a sheet-like body separate from the output shaft 311 and the clamping portion 321 may be clamped. Additionally, it is also possible to adjust the friction by implementing a machining such as coating or roughness on the outer circumferential face of the output shaft 311 or the opposing face 3211 of the clamping portion 321.

Additionally, with respect to the rotational transfer portion 33, which in the described embodiment is constituted by the arm-like part 331, it is also possible to be provided as various structures configured to transmit the drive force from the drive portion 3 and the conversion portion 32 to the iris blade 2.

### Description of reference numerals:

1, frame portion; 11, bottom of frame portion; 12, top of frame portion; 13, side of frame portion; 14, driving substrate; 15, magnetic detection element; 16, cover plate; 2, iris blade; 21, light transmission portion; 22, elongated hole; 3, drive portion; 31, SIDM; 311, output shaft; 312,piezoelectric element; 313,counterweight; 32, conversion portion; 321, clamping portion; 3211, opposing face; 3212, spacing holding portion; 3213, recess; 322, force application portion; 323, support portion; 324, connection component; 33, rotational transfer portion; 331, arm part; 332, connection protrusion; 333, permanent magnet; A, iris mechanism; B, lens assembly; C, shooting element; D, prism.

## Claims

1. An iris mechanism, configured to increase or decrease a passing area of light in a direction of an optical axis, comprising:
a frame portion formed around the optical axis;
an iris blade capable of moving relative to the frame portion in a direction intersecting the optical axis and capable of changing an opening area of an opening in the direction of the optical axis along with a movement; and
a drive portion configured to drive the iris blade to move,
wherein the drive portion comprises:
a smooth impact drive mechanism as a drive source configured to extend and retract in a linear direction according to energization to generate a drive force in the linear direction;
a conversion portion configured to convert the drive force in the linear direction of the smooth impact drive mechanism into a rotational drive force; and
a rotational transfer portion continuous with the conversion portion and connected to the iris blade for rotational movement based on a rotation center.

2. The iris mechanism according to claim 1, wherein
two combined pairs of the iris blade and the drive portion are provided, and sandwich the optical axis in the direction intersecting the optical axis.

3. The iris mechanism according to claim 1 or 2, wherein
the smooth impact drive mechanism has an output shaft extending in the linear direction,
the conversion portion has a pair of clamping portions in an opposing relationship in the direction of the optical axis,
the output shaft is clamped by the pair of clamping portions in a sliding permittable manner, and
in the conversion portion, the drive force in the linear direction of the output shaft is converted into the rotational drive force through contact between an outer circumferential face of the output shaft and the pair of clamping portions, to enable the rotational transfer portion to perform the rotational movement.

4. The iris mechanism according to claim 3, wherein
each of opposing faces of the pair of clamping portions is a flat face.

5. The iris mechanism according to claim 3 or 4, wherein
in the pair of clamping portions, a spacing holding portion configured to hold a spacing of the pair of clamping portions is provided at a radially symmetrical position of the conversion portion based on the rotation center relative to a position in contact with the outer circumferential face of the output shaft.

6. The iris mechanism according to claim 5, wherein
the spacing holding portion is a rotating body, and the rotating body is clamped between the pair of clamping portions and capable of rotating relative to the pair of clamping portions.

7. The iris mechanism according to claim 6, wherein
the rotating body is a ball.

8. The iris mechanism according to claim 7, wherein
at least one of the pair of clamping portions has a recess for a part of the ball to be embedded.

9. The iris mechanism according to claim 8, wherein
the recess is a through hole extending through at least one of the pair of clamping portions.

10. The iris mechanism according to claim 8 or 9, wherein
the conversion portion has a force application portion, and
the force application portion applies a force against the pair of clamping portions in an opposing direction of the pair of clamping portions to hold the spacing fixed.

11. The iris mechanism according to any one of claims 1 to 10, wherein
the rotational transfer portion has a permanent magnet curved along a circumferential direction based on the rotation center; and
the frame portion has a magnetic detection element at a position opposing the permanent magnet in the direction of the optical axis.

12. The iris mechanism according to any one of claims 1 to 11, wherein
the iris blade is supported by an end portion on a side away from the rotation center.

13. The iris mechanism according to claim 12, wherein
the iris blade has an elongated hole extending along direction orthogonal to a movement direction relative to the frame portion and the direction of the optical axis, and
the end portion of the rotational transfer portion is connected to the elongated hole.
